Europäisches Patentamt

European Patent Office

Office européen des brevets

(19)

(11) Publication number: **0 402 360 B1**

# EUROPEAN PATENT SPECIFICATION

(12)

(45) Date of publication of patent specification: **13.10.93**   (51) Int. Cl.5: **H04M 19/00**, H04M 19/02

(21) Application number: **89900825.4**

(22) Date of filing: **24.12.88**

(86) International application number:
**PCT/EP88/01216**

(87) International publication number:
**WO 90/07834 (12.07.90 90/16)**

(54) **IMPEDANCE SYNTHESIS MULTIPLE LOOP USING FILTERING MEANS.**

(43) Date of publication of application:
**19.12.90 Bulletin  90/51**

(45) Publication of the grant of the patent:
**13.10.93 Bulletin  93/41**

(84) Designated Contracting States:
**BE CH DE FR GB IT LI**

(56) References cited:
**EP-A- 0 100 514**
**EP-A- 0 201 635**

(73) Proprietor: **ALCATEL N.V.**
**Strawinskylaan 341**
**(World Trade Center)**
**NL-1077 XX Amsterdam(NL)**
(84) Designated Contracting States:
**CH IT LI**

(73) Proprietor: **BELL TELEPHONE MANUFACTUR-
ING COMPANY Naamloze Vennootschap**
**Francis Wellesplein 1**
**B-2000 Antwerp(BE)**
(84) Designated Contracting States:

**BE DE FR GB**

(72) Inventor: **GUEBELS, Pierre-Paul, François,
Maurice, Marie**
**Ridder Gerardlaan 53**
**B-2520 Edegem(BE)**

(74) Representative: **Vermeersch, Robert**
**BELL TELEPHONE MANUFACTURING COM-
PANY**
**Naamloze Vennootschap**
**Patent Department**
**Francis Wellesplein 1**
**B-2000 Antwerp (BE)**

# EP 0 402 360 B1

**Description**

The invention relates to an impedance synthesis multiple loop using filtering means in association with a common loop and with separate DC and AC loop parts, said filtering means including a transducer fed from the common loop part.

A circuit of this type is known for instance from the European patent application published under No 0201635. It can be used in telecommunication line circuits in order to synthesize suitable signal (AC) impedances presented to various telecommunication lines from an exchange, as well as resistances (DC) to feed the equipment connected to such exchanges via the telecommunication lines, i.e. provide adequate AC and DC terminating impedances under various line conditions. In this known circuit, particular use of a Herter bridge, providing immunity against longitudinal currents, is made in association with a common sense amplifier which is designed to react to a variety of signals having widely differing characteristics such as speech signals, DC signals and relatively high voltage AC ringing currents. This sense amplifier is included in the common loop part and its output feeds separate filter circuits included in both the DC and AC loop parts. In particular, the separate AC loop includes a DC blocking serial capacitance which has a relatively large value for a suitable high pass cut off characteristic eliminating DC but passing the lowest frequency voice signals. Also, in order to cater for the variety of signals that may appear at the input of the sense amplifier, the latter must be carefully designed to avoid saturation by the higher amplitude input signals. Input biassing resistances are used at each of the two inputs terminals of an operational amplifier constituting the sense amplifier. These input biassing resistances are connected to two auxiliary potentials distinct from either ground (0 Volt) or battery potential (-48 Volts), e.g. -33 and -40.5 Volts respectively. As explained in the European application referred to, the first auxiliary potential enables to avoid saturation of the sense amplifier when relatively high voltage ringing signals are applied to the telephone line through the Herter bridge. The second auxiliary potential is used as a special common reference potential for the signals appearing in various parts of the telecommunication line circuit. Since the internal impedances of such auxiliary biassing sources, and particularly the second can never be ideally small, the design must also take care that it will not lead to an unacceptable level of parasitic cross coupled signals.

A general object of the invention is to improve the structure of such an impedance synthesis multiple loop by avoiding previous constraints and more particularly reduce the value of the above filter capacitance, enable a higher AC output from the sense amplifier and avoid a special common reference potential.

In accordance with a first characteristic of the invention, the transducer includes an input stage cascaded with an output stage, an overall negative feedback loop extending from the output of the output stage towards the input of the input stage, and said output stage has either low pass or high pass frequency characteristics whereby one of said stages provides to the AC loop part an output signal excluding low frequency components such as DC the latter appearing only at the output of the other stage feeding the DC loop part.

In this manner, the sense amplifier is now realized as a frequency dependent two-stage amplifier with overall feedback and with the outputs of these two stages supplying directly the low pass, e.g. DC, and high pass (AC) signals respectively.

In accordance with a further characteristic of the invention, the input stage provides the output signal excluding low frequency components such as DC.

This is particularly advantageous for the telecommunication line circuit applications envisaged since in the previously identified European patent application, the amount of gain of the sense amplifier was limited in order to avoid saturation, the AC signal having a relatively small amplitude superposed on a much larger DC amplitude occupying a substantial part of the available voltage range at the output of the sense amplifier. With the new design however, most of that voltage range can be occupied by the output AC signal excursions devoid of any DC component, the latter being only permitted to appear at the output of the output stage, this being eventually true also for low frequency ringing signals. Thus, with only AC signals remaining at the output of the input stage it is now possible to define the gain of that part of the sense amplifier as a function of the maximum AC signal and independently of the DC component.

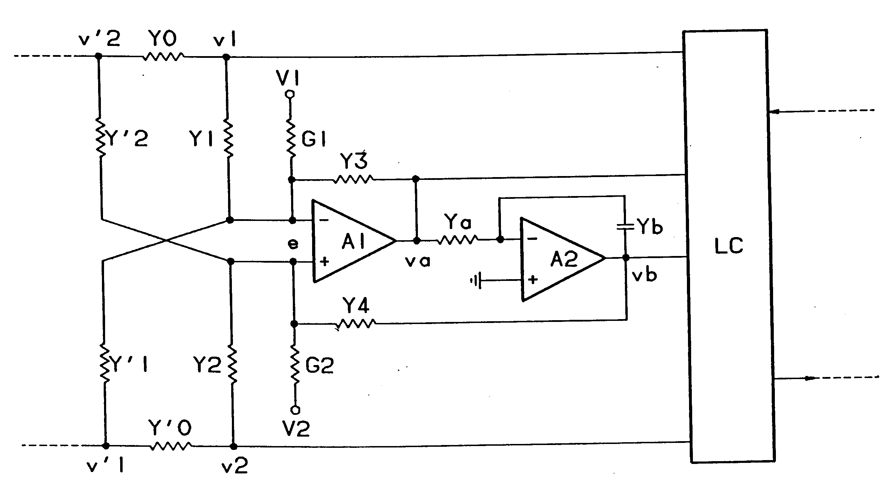

The above mentioned and other objects and features of the invention will become more apparent and the invention itself will be best understood by referring to the following description of a preferred embodiment taken in conjunction with the accompanying drawing representing that part of a Subscriber Line Interface Circuit (SLIC) including a Herter bridge feeding a two-stage sense amplifier in accordance with the invention having separate outputs for the AC and DC synthesis loops.

The Herter bridge is the classical one discussed in the above identified European patent application and is generally embedded in the same manner in the SLIC. Thus, it is essentially a hexapole network with six impedances in a closed ring and three distinct ports, the two terminals of each port being separated by two

2

parallel sets of three impedances in series. The first port coresponding to the indicated signal voltages v1 and v2 is connected to the remaining part LC of the telephone line circuit, the second port corresponding to the indicated signal voltages V'2 and V'1 goes towards the distant telephone subset or other apparatus (not shown) while the third port has its two terminals identified by the common mode voltage signal e appearing at both the inverting and non-inverting input terminals of operational amplifier A1 constituting the input stage of the sense amplifier and to which this third port is connected. Part LC containing the rest of the multiple loop also gives access to the telephone exchange on a four wire basis as opposed to the bidirectional telephone line on the other side.

To simplify some of the subsequent relations, the six impedances constituting the hexapole or Herter bridge have been labelled using an admittance notation so that one has a potential difference v'2 - v1 across feed admittance Y0 and likewise, v2 - v'1 across feed admittance Y'0 for the other subscriber wire. In the classical manner for a Herter bridge affording immunity against longitudial currents and other advantages explained in detail in the above identified European patent application, these feed admittances are relatively high (low resistances), contrary to the remaining four admittances which have relatively low values, i.e. high resistance potentiometers constituted by admittances Y1 and Y'1 in series between the terminals having potentials v1 and v'1, and correspondingly for Y2 in series with Y'2 between v2 and v'2, the potentiometer tapping points constituting the inputs of the first stage A1 of the sense amplifier.

As shown, the inverting input of that stage is biassed to a potential V1 through conductance G1 while the non-inverting input is biassed to V2 through G2. The amplifier input stage A1 develops an output signal va at its output which is coupled to the inverting input of A1 through admittance Y3 as well as to LC in order to complete part of the multiple loop back to the Herter bridger (v1, v2).

So far, the circuit has the general configuration already disclosed in the above identified European application but in contradistinction thereto, the input stage A1 is not a separate sense amplifier to be followed by two separately branched filters at its output in order to isolate the AC and DC signals. Instead, A1 feeds a second amplifier stage A2 and particularly its inverting input since it is also an operational amplifier, and this through the series admittance Ya. This second stage A2 has its non-inverting input suitably biassed, e.g. to ground as indicated, and its output at which a signal vb is developed is connected to its inverting input through admittance Yb. As illustrated, Yb is a capacitance, contrary to the other two-terminal elements such as Ya which are all illustrated as resistances. In addition to the feedback connection between the output of A2 and its inverting input, a further negative feedback connection goes towards the non-inverting input of A1 through admittance Y4.

In this manner, it has been found possible to develop a high pass output va from which the DC component has been eliminated and this is used in the AC loop part through the remaining part LC of the circuit. On the other hand, at the output of A2, the vb response is a low pass function giving a DC signal which feeds the DC loop part also through LC.

While A2 is essentially a Miller effect integrator and the negative feedback connection over the two stages A1 and A2 enables A1 to exhibit a high pass response without a DC component, the following analysis identifies various interacting design parameters.

One may write three current node equations corresponding to the inverting and non-inverting inputs of A1 and to the inverting input of A2 in that order, i.e.

$$(v1-e)Y1 + (v'1-e)Y'1 + (V1-e)G1 + (va-e)Y3 \ = \ 0 \qquad (1)$$

$$(v2-e)Y2 + (v'2-e)Y'2 + (V2-e)G2 + (vb-e)Y4 \ = \ 0 \qquad (2)$$

$$(va)Ya + (vb)Yb \ = \ 0 \qquad (3)$$

The above takes into account the usual conditions at the two input terminals of operational amplifiers, i.e. negligible input currents and same common mode voltage.

Since there are three unknown voltages, i.e. va, vb and e, these can be explicitly produced from the above and by simpler expressions if one bears in mind the constraint already highlighted in the above identified European application and namely that the output voltage of the first stage A1, and accordingly that of the output stage A2 in view of the simple relation (3), should solely be proportional to the sum of the voltages across feed admittances Y0 and Y'0. In other words, one should have

$$va \ = \ m(v2-v'1 + v'2-v1) \qquad (4)$$

in which m is some dimensionless parameter. In order to achieve such a form for va as the above, by replacing into (1), (2) and (3), it can be shown that such a result for va, i.e. directly proportional to the current flowing into the subscriber line through the first wire and returning through the second, without any other component for va depending on the bias voltages V1 and V2, can be secured provided

$$Y1 = Y'1 \qquad (5)$$

$$Y2 = Y'2 \qquad (6)$$

$$Y1(G2 + Y4) = Y2(G1 + Y3) \qquad (7)$$

$$G1.Y2.V1 = G2.Y1.V2 \qquad (8)$$

This last out of the four above relations will also be satisfied irrespective of the values of the admittances involved in the particular case of both V1 and V2 being 0.

Using these four constraints or the parameters, the voltage transfer function for va given by m is defined by

$$m(n + 1)Y3 = Y1 \qquad (9)$$

in which the further dimensionless parameter n is given by

$$n.Y2.Y3.Yb = Y1.Y4.Ya \qquad (10)$$

Thus, m being now identified in function of the admittance parameters, the response va is fully determined whereby this is also true for vb in view of the simple relation (3) between the two. On the other hand, using the constraints (5) to (8) as well as the parameters m and n defined by (9) and (10), the common mode voltage e at the two inputs of stage A1 is identified by

$$e(2Y1 + G1 + Y3) = m(n.v1 + n.v'1 + v2 + v'2) + V1.G1 \qquad (11)$$

The voltage transfer function for the output voltage va is given by m appearing in (4) and defined by (9) and (10) from which it is seen that m can be expressed as a function of the ratio between Ya and Yb. In view of this ratio also linking the output voltages va and vb in the manner defined by (3), if Ya and/or Yb are/is the only frequency dependent admittance(s) in the above expressions, then it is possible to obtain frequency complementary characteristics for the output voltages va and vb. For the circuit shown where Ya is purely resistive and Yb is purely capacitive, a high pass frequency characteristic is obtained for va and a low pass one for vb. By inverting the nature of these two elements, i.e. a capacitance for Ya and a resistance for Yb, the frequency responses would be exchanged so that the low pass one would appear at the output of the input stage A1 and the high pass characteristic at the output of the output stage A2. However, the circuit shown has the advantage that the output amplifier stage A2 is an integrator whereas otherwise it would become a differentiator, the latter being known to be more sensitive to high frequency noise in view of the series input capacitance. Foremost, obtaining the high pass frequency characteristic at the output of the first stage A1 is advantageous when a DC component can have a substantial amplitude much larger than the AC signal amplitude superposed thereon. Indeed, in such a case one must then restrict the gain of A1 in order to prevent saturation, due to most of the available output voltage range being occupied by the output DC signal. This problem is eliminated by removing the DC signal from the output of the first stage A1 and providing this DC signal at the output of the second stage A2 instead.

In a Herter bridge used in a telephone line circuit to couple an outside balanced subscriber line to the rest of the telephone exchange, it is often required to have symmetry for the corresponding elements associated with the two wires of the line so that one will have not only the relations (5) and (6) but all four admittances Y1, Y'1, Y2 and Y'2 will be equal to one another just as this will be the case for the series feed admittances Y0 and Y'0 also part of the Herter bridge. For instance, while these last two might correspond to 50 Ohm resistances, the remaining four impedances constituting the two cross connected potentiometers characteristic for the Herter bridge might each have a value of 60 kOhm.

With such an additional relation as Y1 = Y2, the respective gains obtained at the outputs of A1 and A2 will still be determined by the ratio between Y1 and Y3 appearing in (9) and between Y3 and Y4 present in (10), this apart from the frequency response determined by such an admittance as Yb appearing also in the latter. Assuming for instance that unity gain is desired for A1 at high frequency whereas only a gain of 1/2

4

(in absolute value) is desired at the output of A2 for DC, this can be obtained by choosing the same value for Y3 as for Y1, e.g. resistances of 60 kOhm, whereas Y3 will only have half the value of Y4, e.g. a 30 kOhm resistance for the latter. In such a case one can write

$$m = \frac{1}{1+n} = \frac{Yb}{2Ya+Yb} = \frac{pCR}{2+pCR} \qquad (12)$$

in which the first expression for m defining va in view of (4) is directly obtained in function of n in view of (9) whereas (10) enables n to be expressed in function of the ratio between Ya and Yb giving the final expression in terms of R, the pure resistance corresponding to Ya, and C, the pure capacitance corresponding to Yb, p representing the imaginary angular frequency. On the other hand, calling m' the voltage transfer function for vb corresponding to m for va giver by (4), this is readily obtained from (3), i.e.

$$m' = \left[\frac{-Ya}{Yb}\right] m = \frac{-Ya}{2Ya+Yb} = \frac{-1}{2+pCR} \qquad (13)$$

In the above, the second expression for m' is again obtained from (10) and the final one by again introducing p, C and R, this showing that the DC gain at the output of A2 is only half the unitary gain at high frequency at the output of A1. If one had desired to obtain strictly complementary characteristics in terms of frequency for m and m', i.e. m-m' equal to unity, then this would have been achieved by making both Y3 and Y4 equal to Y1.

Finally, once the values of such admittances as Y1, Y2, Y3, and Y4 have been determined, those of G1 and G2 as well as the biassing voltages V1 and V2 can be found from (7) and (8), For instance, with Y1 = Y2 as considered above, in case Y4 = 2Y3, a suitable solution will be G1 = Y4 and G2 = Y3 in the particular case where both V1 and V2 are equal to 0, i.e. ground reference potential. In case of both unity gain both at high frequency at the output of A1 and forour DC at the output of A2, this time with Y3 = Y4, it is clear from (7) and (8) that this will be satisfied by G1 = G2 and V1 = V2.

As in the above mentioned European application, suitable values for the biassing sources at the inverting and non-inverting inputs of A1 will lead to a non objectionable common mode voltage at the input of A1 as defined by e obtained from (11).

While the principles of the invention have been described above in connection with specific apparatus, it is to be clearly understood that this description is made only by way of example and not as a limitation on the scope of the invention.

**Claims**

1.  Impedance synthesis multiple loop using filtering means in association with a common loop and with separate DC and AC loop parts, said filtering means including a transducer fed from the common loop part, characterized in that the transducer includes an input stage (A1) cascaded with an output stage (A2), an overall negative feedback loop (Y4) extending from the output of the output stage towards the input of the input stage, and that said output stage has either low pass or high pass frequency characteristics whereby one of said stages provides to the AC loop part an output signal excluding low frequency components such as DC the latter appearing only at the output of the other stage feeding the DC loop part.

2.  Impedance synthesis multiple loop as claimed in claim 1, characterized in that said input stage provides the output signal excluding low frequency components such as DC.

3.  Impedance synthesis multiple loop as claimed in claim 1, characterized in that said input stage includes a first operational amplifier (A1) with a first admittance (Y3) between its output and its inverting input, said output being coupled through a second admittance (Ya) to the inverting input of a second operational amplifier (A2) with a third admittance (Yb) between its output and its inverting input, and a fourth admittance (Y4) coupling the output of the second operational amplifier to the non-inverting input of the first operational amplifier to provide said negative feedback loop.

4. Impedance synthesis multiple loop as claimed in claim 3, characterized in that said first and fourth admittances are resistive.

5. Impedance synthesis multiple loop as claimed in claims 2 and 4, characterized in that said second admittance is resistive and said third admittance is frequency dependent.

6. Impedance synthesis multiple loop as claimed in claim 1, characterized in that it is part of a telecommunication line circuit including a Herter bridge with a first pair of terminals (v'2, v'1) coupled to a bidirectional two wire line, a second pair of terminals (v1, v2) coupled to said separate DC and AC loop parts and a third pair of terminals (e) coupled to said input stage.

7. Impedance synthesis multiple loop as claimed in claims 3 and 6, characterized in that the admittances Y1 and Y'1 of the Herter bridge connected to the inverting input of the first operational amplifier have a common value and that the admittances Y2 and Y'2 of the Herter bridge connected to the non-inverting input of the first operational amplifier have a common value whereby the voltage across said third pair of terminals solely depends on the sum of the voltages between the first terminals (v'2-v1) of said first and second pairs of terminals and between the second terminals (v2-v'1) of said first and second pairs of terminals and is directly proportional thereto.

8. Impedance synthesis multiple loop as claimed in claim 7, characterized in that a source of voltage V1 and admittance G1 biasses the inverting input of the first operational amplifier, that a source of voltage V2 and admittance G2 biasses the non-inverting input of the first operational amplifier and that their values are related to those of the admittances Y1 and Y2 and to those of said first (Y3) and fourth (Y4) admittances by the relations

$$Y1(G2 + Y4) \ = \ Y2(G1 + Y3)$$
$$G1.Y2.V1 \ = \ G2.Y1.V2.$$

9. Impedance synthesis multiple loop as claimed in claim 1, characterized in that low frequency ringing signals may appear at the output of said other stage.

**Patentansprüche**

1. Mehrschleifenimpedanzsynthese, weiche Filtermittel in Verbindung mit einer gemeinsamen Schleife und mit getrennten Gleichstrom- und Wechselstrom-Schleifenteilen verwenden, wobei die genannten Filtermittel einen vom gemeinsamen Schleifenteil gespeisten Wandler aufweisen, dadurch gekennzeichnet, dass der Wandler eine mit einer Ausgangsstufe (A2) in Kaskade geschaltete Eingangsstufe (A1) aufweist, wobei sich eine im ganzen negative Rückführschleife (Y4) vom Ausgang der Ausgangsstufe zum Eingang der Eingangsstufe erstreckt, und dass die genannte Ausgangsstufe entweder eine Tiefpass- oder Hochpass-Frequenzkennlinie aufweist, wodurch eine der genannten Stufen dem Wechselspannungsschleifenteil ein Ausgangssignal abgibt, das tieffrequente Komponenten wie Gleichstrom ausschliesst, wobei der letztere nur am Ausgang der andern Stufe erscheint, welche den Gleichstromschleifenteil speist.

2. Mehrschleifenimpedanzsynthese nach Anspruch 1, dadurch gekennzeichnet, dass die genannte Eingangsstufe das Ausgangssignal vorsieht, das tieffrequente Komponenten wie Gleichstrom ausschliesst.

3. Mehrschleifenimpedanzsynthese nach Anspruch 1, dadurch gekennzeichnet, dass die genannte Eingangsstufe einen ersten Operationsverstärker (a1) aufweist mit einem ersten Scheinleitwert (Y3) zwischen seinem Ausgang und seinem nichtinvertierenden Eingang, wobei der genannte Ausgang über einen zweiten Scheinleitwert (Ya) mit dem invertierenden Eingang eines zweiten Operationsverstärkers (A2) gekoppelt ist, mit einem dritten Scheinleitwert ((Yb) zwischen seinem Ausgang und seinem invertierenden Eingang, mit einem vierten Scheinleitwert (Y4), welcher den Ausgang des zweiten Operationsverstärkers mit dem nichtinvertierenden Eingang des ersten Operationsverstärkers kappelt, um die genannte negative Rückführschleife vorzusehen.

4. Mehrschleifenimpedanzsynthese nach Anspruch 3, dadurch gekennzeichnet, dass die genannten zweiten und ersten Scheinleitwerte ohmisch sind.

**5.** Mehrschleifenimpedanzsynthese nach Anspruch 3, dadurch gekennzeichnet, dass der genannte zweite Scheinleitwert ohmisch ist und der genannte dritte Scheinleitwert frequenzabhängig ist.

**6.** Mehrschleifenimpedanzsynthese nach Anspruch 1, dadurch gekennzeichnet, dass sie Teil einer Fernmeldeleitungsschaltung ist, die eine Herterbrücke umfasst mit einem ersten Paar von Anschlüssen (v'2, v'1), welche mit einer bidirektionalen 2-Drahtleitung gekoppelt sind, mit einem zweiten Paar von Anschlüssen (v1, v2), welche mit den genannten, getrennten Gleichstrom- und Wechselstram-Schleifenteilen gekoppelt sind, und mit einem dritten Paar von Anschlüssen (e), welche mit der genannten Eingangsstufe gekoppelt sind.

**7.** Mehrschleifenimpedanzsynthese nach den Ansprüchen 3 und 6, dadurch gekennzeichnet, dass die Scheinleitwerte Y1 und Y'1 der Herterbrücke, die mit dem invertierenden Eingang des ersten Operationsverstärkers verbunden sind, einen gemeinsamen Wert haben, und dass die Scheinleitwerte Y2 und Y'2 der Herterbrücke, die mit dem nichtinvertierenden Eingang des ersten Operationsverstärkers verbunden sind, einen gemeinsamen Wert haben, wodurch die Spannung über dem genannten dritten Paar von Anschlüssen lediglich abhängig ist von der Summe der Spannungen zwischen den ersten Anschlüssen (v'2-v1) des genannten ersten und zweiten Paares von Anschlüssen und zwischen den zweiten Anschlüssen (v2-v'1) des genannten ersten und zweiten Paares von Anschlüssen und direkt proportional dazu ist.

**8.** Mehrschleifenimpedanzsynthese nach Anspruch 7, dadurch gekennzeichnet, dass eine Spannungsquelle V1 und ein Scheinleitwert G1 den invertierenden Eingang des ersten Operationsverstärkers vorspannen, dass eine Spannungsquelle V2 und ein Scheinleitwert G den nichtinvertierenden Eingang des ersten Operationsverstärkers vorspannen, und dass deren Werte Bezug haben mit jenen der Scheinleitwerte Y1 und Y2 und mit jenen der ersten (Y3) und vierten (Y4) Scheinleitwerte durch die Beziehungen

$$Y1(G2 + y4) \; = \; Y2(G1 + Y3)$$
$$G1.Y2.V1 \; = \; G2.Y1.V2.$$

**9.** Mehrschleifenimpedanzsynthese nach Anspruch 1, dadurch gekennzeichnet, dass die Niederfrequenzrufsignale am Ausgang der genannten andern Stufe erscheinen könnnen.

## Revendications

**1.** Bouche multiple à synthèse d'impédance utilisant des moyens de filtrage en association avec une boucle commune et avec des parties de bouche séparées continue et alternative, lesdits moyens de filtrage incluant un transducteur alimenté par la partie de bouche commune, caractérisé en ce que le transducteur comprend un étage d'entrée (A1) en cascade avec un étage de sortie (A2), une bouche de contre-réaction globale (Y4) s'étendant de la sortie de l'étage de sortie vers l'entrée de l'étage d'entrée et ledit étage de sortie ayant une caractéristique de fréquence soit passe-bas, soit passe-haut, de sorte que l'un desdits étages fournisse à la partie de boucle alternative un signal de sortie excluant des composantes à basses fréquences, telle que le courant continu, ce dernier n'apparaissant qu'à la sortie de l'autre étage alimentant la partie de boucle continue.

**2.** Boucle multiple à synthèse d'impédance selon la revendication 1, caractérisée en ce que ledit étage d'entrée fournit un signal de sortie excluant des composantes à basses fréquences, telles que le courant continu.

**3.** Bouche multiple à synthèse d'impédance selon la revendication 1, caractérisée en ce ledit étage d'entrée inclut un premier amplificateur opérationnel (A1) ayant une première admittance (Y3) entre sa sortie et son entrée inverseuse, ladite sortie étant couplée, par l'intermédiaire d'une deuxième admittance (Ya) à l'entrée inverseuse d'un deuxième amplificateur opérationnel (A2) ayant une troisième admittance (Yb) entre sa sortie et son entrée inverseuse, ainsi qu'une quatrième admittance (Y4) couplant la sortie du deuxième amplificateur opérationnel à l'entrée non-inverseuse du premier amplificateur opérationnel, afin de fournir ladite bouche de contre-réaction.

**4.** Boucle multiple à synthèse d'impédance selon la revendication 3, caractérisée en ce que lesdites première et quatrième admittances sont résistives.

**5.** Boucle multiple à synthèse d'impédance selon les revendications 2 et 4, caractérisée en ce que ladite deuxième admittance est résistive et ladite troisième admittance est dépendente de la fréquence.

**6.** Boucle multiple à synthèse d'impédance selon la revendication 1, caractérisé en ce qu'il fait partie d'un circuit de ligne de télécommunications incluant un pont de Herter ayant une première paire de bornes (v'2, v'1) couplées à une ligne deux-fils bidirectionnelle, une deuxième paire de bornes (v1, v2) couplée auxdites parties de boucle continue et alternative et une troisième paire de bornes (e) couplée audit étage d'entrée.

**7.** Boucle multiple à synthèse d'impédance selon la revendication 3 et 6, caractérisée en ce que les admittances Y1 et Y'1 du pont de Herter, connectées à l'entrée inverseuse du premier amplificateur opérationnel, ont une valeur commune et en ce que les admittances Y2 et Y'2 du pont de Herter, connectées à l'entrée non-inverseuse du premier amplificateur opérationnel, ont une valeur commune, de sorte que la tension entre ladite troisième paire de bornes ne dépende que de la somme des tensions entre les premières bornes (v'2-v1) desdites première et deuxième paires de bornes et entre les deuxième bornes (v2-v'1) desdites première et deuxième paires de bornes, et lui est directement proportionnelle.

**8.** Boucle multiple à synthèse d'impédance selon la revendication 7, caractérisée en ce qu'une source de tension V1 et une admittance G1 polarisent l'entrée inverseuse du premier amplificateur opérationnel, une source de tension V2 et une admittance G2 polarisent l'entrée non-inverseuse du premier amplificateur opérationnel et en ce que leurs valeurs sont reliées à celles des admittances Y1 et Y2 et à celles desdites première (Y3) et quatrième (Y4) admittances par les relations

$$Y1(G2 + Y4) = Y2(G1 + Y3) \text{ et}$$
$$G1.Y2.V1 = G2.Y1.V2.$$

**9.** Boucle multiple à synthèse d'impédance selon la revendication 1, caractérisée en ce que des signaux de sonnerie à basse fréquence peuvent apparaître à la sortie dudit autre étage.

EP 0 402 360 B1